# EUROPEAN PATENT APPLICATION

(11) **EP 4 571 611 A1**
(43) Date of publication of application: **18.06.2025**
(21) Application number: 24208696.5
(22) Date of filing: 24.10.2024
(51) Int. Cl.: G06Q 10/0639

(54) **SYSTEM AND METHOD FOR DETERMINING PROFICIENCY LEVEL**

(30) Priority: 14.12.2023 JP 2023210870
(71) Applicant: Hitachi, Ltd., Tokyo 100-8280 (JP)
(72) Inventor: TERAUCHI, Risa, Tokyo, 1008280 (JP); FUJIWARA, Takayuki, Tokyo, 1008280 (JP)
(74) Representative: Manitz Finsterwald Patent- und Rechtsanwaltspartnerschaft mbB

(57) **Abstract**

A proficiency level determination system is a system for determining a proficiency level of a worker and includes: an operation log acquisition unit configured to acquire an operation log representing a log of an operation performed by a worker during work from an operating device of the worker; an operation log classification unit configured to classify the acquired operation log according to each of the proficiency levels, which stepwise indicates a degree of proficiency level of the worker in the work; a reference operation model creation unit configured to create, based on the operation log classified according to each of the proficiency levels, a reference operation model corresponding to the proficiency level for each of the proficiency levels; a reference operation model information extraction unit configured to extract, according to information related to the operation log acquired from the operating device, information related to the reference operation model corresponding to the operation log; a deviation degree calculation unit configured to calculate a deviation degree of the operation log with respect to the extracted information related to the reference operation model; and a proficiency level determination unit configured to determine a reference operation model in which the calculated deviation degree is minimum, and allocate a proficiency level corresponding to the determined reference operation model as a proficiency level of the operation log acquired from the operating device.

## Description

### BACKGROUND OF THE INVENTION

### 1. Field of the Invention

The present invention relates to a computer technique for determining a proficiency level.

### 2. Description of Related Art

Even in today's industrial world where mechanization and automation are progressing, there are still many tasks that are performed manually, particularly in manufacturing and maintenance-related business sites. Therefore, effectively and efficiently training workers who are actually engaged in the various tasks at these sites remains an important theme for many business operators.

As part of such techniques for effectively and efficiently training a worker, various techniques have been proposed in which motion data with an operation during work of a worker recorded therein in detail is acquired, and education and training of this worker are performed by utilizing the motion data (for example, PTLs 1 and 2).

### Citation List

### Patent Literature

PTL 1: WO2017/150293
PTL 2: JP2022-522159A

### SUMMARY OF THE INVENTION

To effectively and efficiently provide education, training, and the like to the workers engaged in various site works to train the workers, it is essential to quantitatively evaluate a proficiency level of each worker which means how proficient the worker is in a task assigned thereto. However, until now there has been no technique capable of providing education, training, and the like to the worker in consideration of the proficiency level in the assigned work, and development of a novel technique has been awaited.

In particular, when dedicated content (hereinafter, also referred to as "online content") for providing education, training, and the like to the worker is provided on a network, and education, training, and the like is provided online to the worker by causing the worker to connect to the online content from a terminal held by the worker, the online content may not be normally played and operated depending on a specification and performance of the terminal held by the worker, which is difficult to appropriately provide education, training, and the like.

The invention has been made in view of the technical problem described above, and an object thereof is to provide a technique capable of accurately determining, based on acquired data, a proficiency level of each worker who uses a terminal to access online content for education and training, extracting optimal knowledge according to the determined proficiency level, and displaying the extracted knowledge in an appropriate form according to a specification and performance of the terminal, regardless of a specification and performance of the terminal.

A proficiency level determination system according to the invention is a system for determining a proficiency level of a worker and includes: an operation log acquisition unit configured to acquire an operation log representing a log of an operation performed by a worker during work from an operating device of the worker; an operation log classification unit configured to classify the acquired operation log according to each of the proficiency levels, which stepwise indicates a degree of proficiency of the worker in the work; a reference operation model creation unit configured to create, based on the operation log classified according to each of the proficiency levels, a reference operation model corresponding to the proficiency level for each of the proficiency levels; a reference operation model information extraction unit configured to extract, according to information related to the operation log acquired from the operating device, information related to the reference operation model corresponding to the operation log; a deviation degree calculation unit configured to calculate a deviation degree of the operation log with respect to the extracted information related to the reference operation model; and a proficiency level determination unit configured to determine a reference operation model in which the calculated deviation degree is minimum, and allocate a proficiency level corresponding to the determined reference operation model as a proficiency level of the operation log acquired from the operating device.

In addition, other problems disclosed by the present application and methods for solving the problems will be made clear by the section of the embodiments for carrying out the invention and the drawings.

According to the invention, a proficiency level of each worker who uses a terminal to access online content for education and training can be accurately determined based on acquired data, optimal knowledge can be extracted according to the determined proficiency level, and the extracted knowledge can be displayed in an appropriate form according to a specification and performance of the terminal, regardless of the specification and performance of the terminal.

### BRIEF DESCRIPTION OF THE DRAWINGS

FIG. 1 is a diagram illustrating an example of a configuration of an entire system of a proficiency level determination system according to an embodiment;
FIG. 2 is a diagram illustrating an example of a configuration of a proficiency level determination device;
FIG. 3 is a diagram illustrating an example of a configuration of an operation log database;
FIG. 4 is a diagram illustrating an example of a configuration of a reference operation model database;
FIG. 5 is a diagram illustrating an example of a configuration of an educational virtual space database;
FIG. 6 is a diagram illustrating an example of a configuration of an operation log collection device;
FIG. 7 is a flowchart illustrating an example of a flow of reference operation model creation processing;
FIG. 8 is a flowchart illustrating an example of a flow of proficiency level determination processing;
FIG. 9 is a flowchart illustrating an example of a flow of knowledge extraction and provision processing;
FIG. 10 is a diagram illustrating an example of a knowledge play screen when a proficiency level is not a highest level; and
FIG. 11 is a diagram illustrating an example of a knowledge play screen when the proficiency level is the highest level.

### DESCRIPTION OF EMBODIMENTS

In the following description, an "interface device" may be one or more interface devices. The one or more interface devices may be at least one of the following.
·One or more input/output (I/O) interface devices. The input/output (I/O) interface device is an interface device for at least one of an I/O device and a remote display computer. The I/O interface device for the display computer may be a communication interface device. At least one I/O device may be a user interface device, for example, any one of an input interface device such as a keyboard and a pointing device and an output interface device such as a display device.
-One or more communication interface devices. One or more communication interface devices may be one or more communication interface devices of the same type (for example, one or more network interface cards (NICs)) or two or more communication interface devices of different types (for example, a NIC and a host bus adapter (HBA)).

In the following description, a "memory" is one or more memory devices serving as an example of one or more storage devices and may be typically a main storage device. At least one memory device in the memory may be a volatile memory device or a non-volatile memory device.

In the following description, an "auxiliary storage device" may be one or more auxiliary storage devices serving as an example of the one or more storage devices. The auxiliary storage device may be typically a non-volatile storage device (for example, a persistent storage device), and specifically may be, for example, a hard disk drive (HDD), a solid state drive (SSD), a non-volatile memory express (NVME) drive, or a storage class memory (SCM).

In the following description, the "storage device" may be at least the memory in the memory and the auxiliary storage device.

In the following description, a "processor" may be one or more processor devices. At least one processor device may typically be a micro processor device such as a central processing unit (CPU), may include another type of processor device such as a graphics processing unit (GPU), or may be another type of processor device. At least one processor device may be a single core or a multi-core. At least one processor device may be a processor core. At least one processor device may be a processor device in a broad sense, such as a circuit (for example, a field-programmable gate array (FPGA), a complex programmable logic device (CPLD), or an application specific integrated circuit (ASIC)), which is an aggregate of gate arrays in a hardware description language in which a part or all of the processing is executed.

In the following description, functions may be described by an expression of "xxx unit", but the functions may be implemented by one or more computer programs (hereinafter, also simply referred to as "programs") being executed by a processor, may be implemented by one or more hardware circuits (for example, FPGA or ASIC), or may be implemented by a combination thereof. When the functions are implemented by the program being executed by the processor, the functions may be at least a part of the processor as specified processing is executed using the storage device and/or an interface device as appropriate. Processing described with a function as a subject may be processing executed by a processor or a device including the processor. The program may be installed from a program source. The program source may be, for example, a program distribution computer or a computer-readable recording medium (for example, a non-transitory recording medium). Description of the functions is an example. A plurality of functions may be integrated into one function, or one function may be divided into a plurality of functions.

In the following description, expressions such as "yyy database" and "yyy table" may be used to describe information that gives an output for an input. The information may be represented by any data structure, or may be a learning model represented by a neural network, a genetic algorithm, or a random forest that generates an output for an input. That is, to indicate that the information does not depend on the data structure, "yyy database" and "yyy table" can be expressed as "yyy information". In the following description, a configuration of each database is an example. One database may be divided into two or more databases, or all or a part of two or more databases may be one database.

In the following description, the processing may be described using the "program" as a subject. The processing described with the program as the subject may be processing executed by a processor or a device including the processor. Two or more programs may be implemented as one program, or one program may be implemented as two or more programs.

In the following description, a "proficiency level determination device" that implements a "proficiency level determination system" may be a device or a system (for example, an on-premise device or system) implemented by one or more physical computers, or may be a system (for example, a cloud computing system) implemented on a group of physical computing resources (for example, a cloud infrastructure). The proficiency level determination system "displaying" display information may be displaying the display information on a display device included in the computer (the proficiency level determination device), or may be transmitting the display information from the computer (the proficiency level determination device) to the display computer (an operation log collection device) (in the latter case, the display information is displayed by the display computer (the operation log collection device)).

Hereinafter, the present embodiment will be described in detail with reference to the drawings.

In the following description, the same or similar components are denoted by the same reference signs, and redundant description may be omitted.

When there are a plurality of elements having the same or similar functions, the plurality of elements may be described by using the same reference signs with different suffixes to distinguish the plurality of elements. On the other hand, when there is no need to distinguish the plurality of elements, the suffixes may be omitted.

### Configuration Example of Proficiency Level Determination System 10

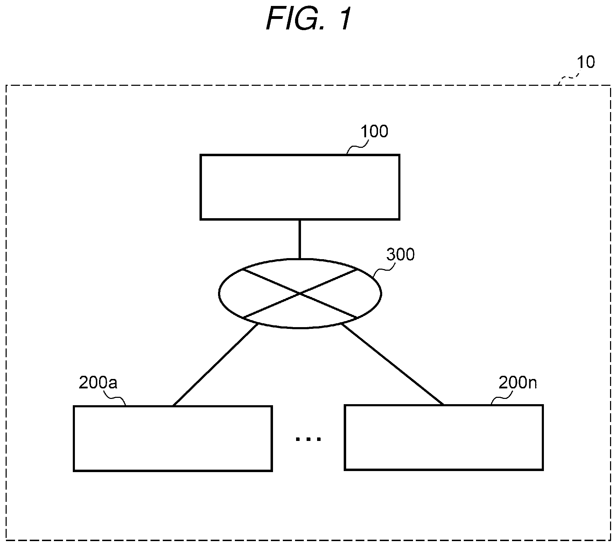

First, a configuration example of a proficiency level determination system 10 will be described with reference to FIGS. 1 to 6.

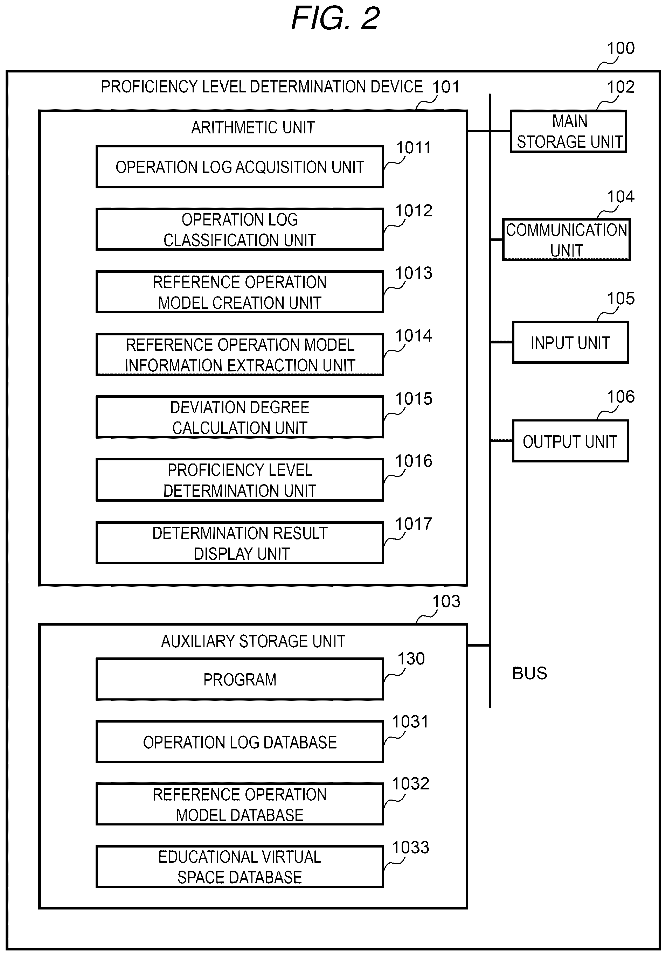

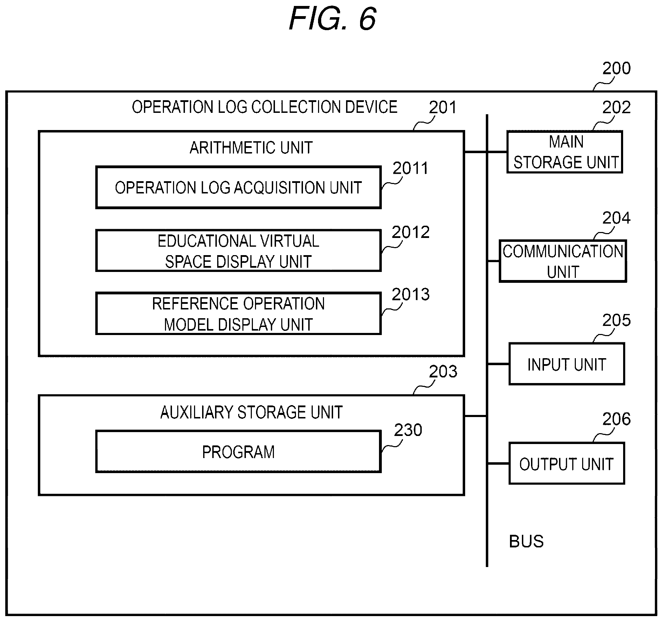

FIG. 1 is a diagram schematically illustrating an example of a network configuration of the entire system of the proficiency level determination system 10 according to the present embodiment. FIG. 2 is a diagram illustrating an example of a configuration of a proficiency level determination device 100 implementing the proficiency level determination system 10. FIG. 6 is a diagram illustrating an example of a configuration of an operation log collection device 200 implementing the proficiency level determination system 10.

### Configuration Example of Entire System

The proficiency level determination system 10 according to the present embodiment is a computer system capable of determining a proficiency level of a worker engaged with various works for education, training, and the like in content for education and training for educating and training the worker in a virtual space, extracting optimal knowledge based on a determination result, and providing the extracted optimal knowledge to the worker, and is implemented by a plurality of computer devices or server devices having respective configurations to be described later.

As illustrated in FIG. 1, the proficiency level determination system 10 includes the proficiency level determination device 100 as a component. The proficiency level determination device 100 is a computer device capable of accurately determining the proficiency level of the worker who uses the terminal including the input and output device ,regardless of specifications and performances of the input and output device, to access the content for education and training based on the data acquired via the input device, extracting optimal knowledge according to the determined proficiency level, and displaying the extracted knowledge in an appropriate form according to a specification and performance of the output device of the terminal, regardless of the specification and performance of the input and output device of the terminal.

As illustrated in FIG. 1, various terminals such as a laptop PC, a tablet, or a smartphone owned by each worker who is a user of the content for education and training, that is, a user of the proficiency level determination system 10, are connected to the proficiency level determination device 100 as operation log collection devices 200a, 200b, 200c, ..., 200n (hereinafter, when referring to these devices collectively or when there is no particular distinction therebetween, these devices will be collectively referred to as the "operation log collection device 200") to be able to communicate data with each other via an appropriate communications network (hereinafter, also simply referred to as a "network") 300 such as the Internet or a dedicated line. The proficiency level determination device 100 and the network 300 are connected by wire via a well-known communication device (not illustrated), and may be connected wirelessly. Each operation log collection device 200 and the network 300 are connected wirelessly, and may be connected by wire. A unique ID called a user ID is assigned in advance to each user of the proficiency level determination system 10, who owns the operation log collection device 200.

The proficiency level determination device 100 and the operation log collection device 200 are connected via the network 300 to be able to communicate data with each other, thereby implementing the proficiency level determination system 10 as a whole. That is, as illustrated in FIG. 1, the proficiency level determination system 10 includes, as a component, at least one operation log collection device 200 which is connected to the proficiency level determination device 100 to be able to communicate data with each other.

The operation log collection device 200 is a terminal used by each worker who is the user of the proficiency level determination system 10 to access the content for education and training. The operation log collection device 200 mainly executes various types of processing such as playing of the content for education and training, acquisition of logs of various operations (hereinafter also referred to as "operation logs") of the worker in the content for education and training, transmission of the acquired operation logs to the proficiency level determination device 100, reception of knowledge optimal for the worker extracted by the proficiency level determination device 100, and output of the received knowledge to the output device (for example, display on a display device when the output device is a display device). Among these types of processing, the playing of the content for education and training and the display of the knowledge received from the proficiency level determination device 100 are appropriately executed according to the specification and performance of the output device included in the operation log collection device 200 (to be described in detail later).

Another device or another terminal (hereinafter, also simply referred to as "another device") may be connected to the proficiency level determination device 100 and the operation log collection device 200 which implement the proficiency level determination system 10 to be able to communicate data via the network 300. In this case, the another device and the network 300 may be connected by wire via a well-known communication device (not illustrated) or may be connected wirelessly. In this case, the proficiency level determination device 100 and/or the operation log collection device 200 may acquire various types of data to be used in each processing to be described later, for example, from such another device.

In addition, in the present embodiment, as illustrated in FIG. 1, the proficiency level determination device 100 and the operation log collection device 200 which implement the proficiency level determination system 10 are each described as being implemented by a single device. However, for example, the proficiency level determination device 100 and/or the operation log collection device 200 may be implemented by a plurality of devices.

In the present embodiment, as illustrated in FIG. 1, the proficiency level determination device 100 and the operation log collection device 200 are each described as being implemented by separate devices. However, the proficiency level determination device 100 and the operation log collection device 200 which implement the proficiency level determination system 10 may be implemented by the same device. In this case, for example, the proficiency level determination device 100 may include a part or all of the functions of the operation log collection device 200. For example, the operation log collection device 200 may include a part or all of the functions of the proficiency level determination device 100.

In the present embodiment, the proficiency level determination device 100 and the operation log collection device 200 which implement the proficiency level determination system 10 and another device are each described as being implemented by separate devices. However, the proficiency level determination device 100 and/or the operation log collection device 200 and another device may be implemented by the same device. In this case, the proficiency level determination system 10 may be implemented, for example, as a computer system including a part or all of another device. For example, the proficiency level determination system 10 may include a part or all of the functions of another device.

### Hardware Structure Example of Proficiency Level Determination Device 100

Next, an example of a hardware structure of the proficiency level determination device 100 according to the present embodiment will be described.

The proficiency level determination device 100 is implemented by a computer including at least a storage device including a memory (not illustrated) and an auxiliary storage device (not illustrated), an interface device including at least a communication device (not illustrated), and a processor (not illustrated) connected to these devices. In the proficiency level determination device 100, the interface device may further include an input device (not illustrated) and/or an output device (not illustrated).

In the following description, the proficiency level determination device 100 is implemented by a general-purpose computer device including one or more processors, one or more memories, one or more auxiliary storage devices, one or more communication devices, one or more input devices, one or more output devices, and a wired or wireless communication line BUS that connects these devices.

The auxiliary storage device is an auxiliary storage device including a non-volatile storage element such as a flash memory. Specific examples of the auxiliary storage device include a solid state drive (SSD) and a hard disk drive (HDD). The auxiliary storage device stores at least a program 130. The program 130 is a computer program for implementing the functions required for the proficiency level determination device 100.

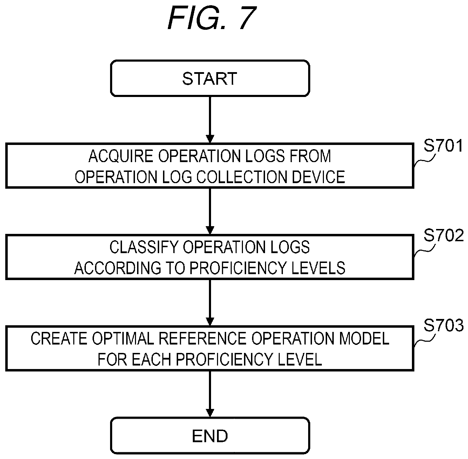

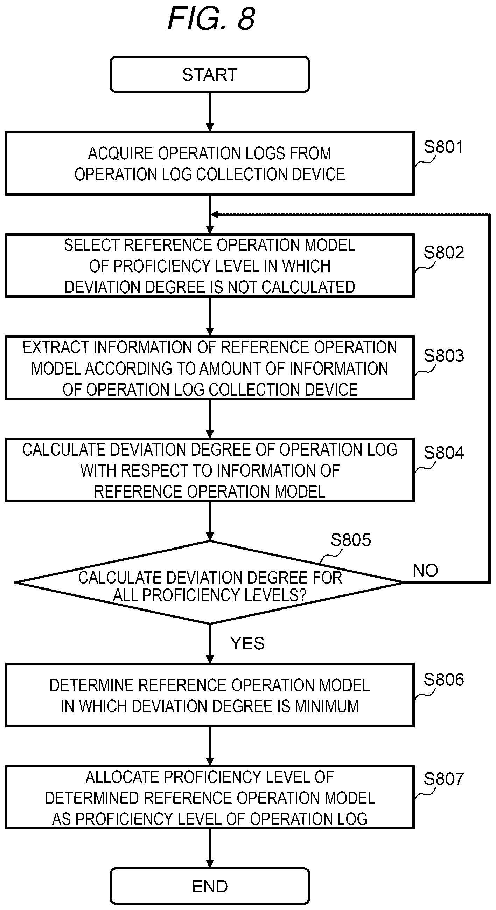

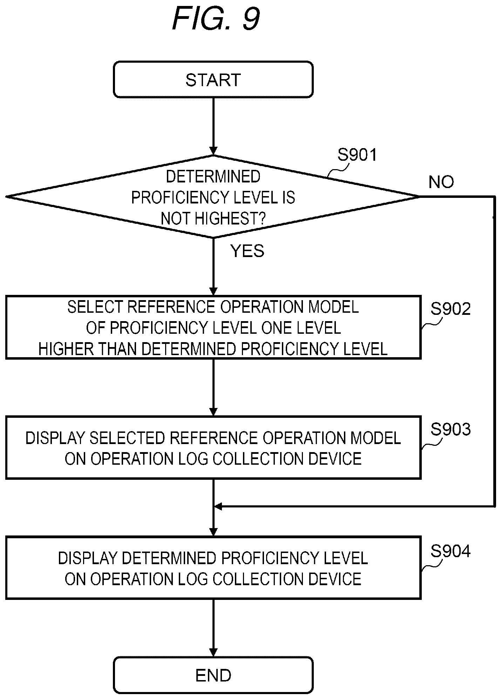

That is, when the program 130 is executed by the processor, functions of the respective functional units of the proficiency level determination device 100, such as an operation log acquisition unit 1011, an operation log classification unit 1012, a reference operation model creation unit 1013, a reference operation model information extraction unit 1014, a deviation degree calculation unit 1015, a proficiency level determination unit 1016, and a determination result display unit 1017 to be described later are implemented. In other words, when the program 130 is executed by the processor, various types of processing including processing related to the creation of a reference operation model (hereinafter also referred to as "reference operation model creation processing") to be described later with reference to FIG. 7, processing related to the determination of the proficiency level (hereinafter also referred to as "proficiency level determination processing") to be described later with reference to FIG. 8, and processing related to extraction and provision of knowledge (hereinafter also referred to as "knowledge extraction and provision processing") to be described later with reference to FIG. 9 are executed.

The program 130 is provided to the proficiency level determination device 100 via the network 300 and/or various removable media such as a CD-ROM or a flash memory and is stored in a non-volatile auxiliary storage device which is a non-transitory storage medium. Therefore, the proficiency level determination device 100 may include an interface for reading data from the removable media.

The program 130 may be installed from a program source. The program source may be, for example, a program distribution computer or a computer-readable recording medium. The program 130 may be implemented by a device driver, an operating system, various application programs located at a higher layer of the device driver and the operating system, or a library that provides a common function to these programs. Two or more programs may be implemented as one program 130, or one program 130 may be implemented as two or more programs.

The memory is a main storage device mainly including a volatile storage element such as a random access memory (RAM). The memory includes a ROM including a non-volatile storage element. The ROM stores an immutable program (for example, BIOS). The memory temporarily stores data representing various types of information read from the auxiliary storage device and various types of data acquired via the communication device and/or the input device.

The processor is a processor device such as a central processing unit (CPU) and various co-processors. The processor calls various computer programs including the program 130 into the memory and executes the computer programs to execute overall control of the proficiency level determination device 100 itself and controls an arithmetic unit 101 that executes various types of processing such as arithmetic processing and determination processing.

The interface device includes a communication device that controls a communication unit 104 to be described later, an input device that controls an input unit 105 to be described later, and an output device that controls an output unit 106 to be described later.

The communication device is a network interface device that controls communication with the operation log collection device 200 or another device according to a predetermined protocol.

The input device includes, for example, various input interface devices for receiving input operations from an administrator of the proficiency level determination device 100 and/or the proficiency level determination system 10 and the user of the proficiency level determination system 10, such as a keyboard, a mouse, or a touch panel.

The output device includes various output interface devices for outputting a processing result to the administrator of the proficiency level determination device 100 and/or the proficiency level determination system 10 and the user of the proficiency level determination system 10 in a recognizable form, such as various display devices such as a liquid crystal display or a touch screen.

The proficiency level determination device 100 may be implemented by an independent device or may be implemented by an embedded device.

### Functional Block Example of Proficiency Level Determination Device 100

Next, an example of blocks of various functions included in the proficiency level determination device 100 will be described with reference to FIG. 2. Each block to be described below does not represent a hardware unit configuration but represents a functional unit block.

The proficiency level determination device 100 mainly includes the functional blocks including the arithmetic unit 101 implemented by the processor described above, a storage unit (102, 103) implemented by the storage device described above, the communication unit 104 implemented by the communication device described above, and a user interface unit (105, 106) implemented by the input device and/or the output device described above.

The arithmetic unit 101 executes various types of data processing based on programs and data stored in the storage unit (102, 103) and data acquired by the communication unit 104. The arithmetic unit 101 also functions as an interface to the storage unit (102, 103) and the communication unit 104.

The arithmetic unit 101 includes functional blocks of the operation log acquisition unit 1011, the operation log classification unit 1012, the reference operation model creation unit 1013, the reference operation model information extraction unit 1014, the deviation degree calculation unit 1015, the proficiency level determination unit 1016, and the determination result display unit 1017.

The operation log acquisition unit 1011 executes processing of acquiring the operation logs.

The operation log classification unit 1012 executes processing of classifying the operation logs acquired by the operation log acquisition unit 1011.

The reference operation model creation unit 1013 executes processing of creating the reference operation model.

The reference operation model information extraction unit 1014 executes processing of extracting various types of information from the reference operation model.

The deviation degree calculation unit 1015 executes processing of calculating a deviation degree.

The proficiency level determination unit 1016 executes processing of determining the proficiency level.

The determination result display unit 1017 executes processing of displaying a determination result of the proficiency level.

The arithmetic unit 101 is implemented using a processor and can implement these functional blocks by executing the program 130 described above. Instead of the processor, the arithmetic unit 101 may be implemented using a logic circuit such as a field-programmable gate array (FPGA) or an application specific integrated circuit (ASIC). The arithmetic unit 101 may be implemented by a combination of a processor and a logic circuit.

The storage unit (102, 103) includes, for example, a main storage unit 102 implemented by a memory and an auxiliary storage unit 103 implemented by an auxiliary storage device, and stores the program 130 for supplying various processing instructions to the arithmetic unit 101 and data indicating various types of information used in the processing executed by the arithmetic unit 101.

The auxiliary storage unit 103 stores an operation log database 1031, a reference operation model database 1032, and an educational virtual space database 1033.

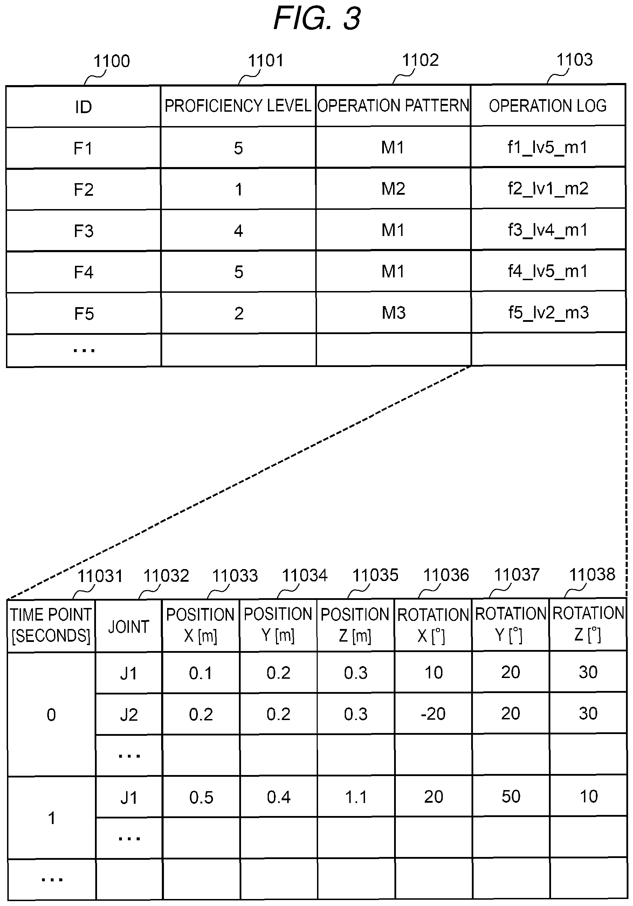

The operation log database 1031 is a database in which the operation logs used to create the reference operation model are stored. FIG. 3 illustrates an example of a configuration of the operation log database 1031. As illustrated in FIG. 3, the operation log database 1031 includes a record for each ID 1100. The record indicates the ID 1100 which is a management label for uniquely identifying each operation log, a proficiency level 1101 of the user related to the operation log, an operation pattern 1102 representing a type of the operation related to the operation log, and a name of a data file in which the operation log 1103 received from the operation log collection device 200 owned by the user is recorded. In the proficiency level determination system 10 according to the present embodiment, the proficiency level 1101 is classified into five stages as illustrated in FIG. 3. In the example illustrated in FIG. 3, three types of operation patterns 1102 are recorded. As illustrated in FIG. 3, the operation log 1103 is recorded in a file format such as bvh, and includes, as information, a time point 11031 that is time information with an acquisition start time of the operation log 1103 as 0 seconds, a joint 11032 that is a label for uniquely identifying each joint constituting skeleton information, a position 11033 of the joint in an X axis direction in a three-dimensional orthogonal coordinate system, a position 11034 in a Y axis direction, a position 11035 in a Z axis direction, a rotation amount 11036 of the joint in the X axis direction in the three-dimensional orthogonal coordinate system, a rotation amount 11037 in the Y axis direction, and a rotation amount 11038 in the Z axis direction. That is, the operation log database 1031 manages, for each operation log, detailed information related to each operation log acquired from the operation log collection device 200 by recording the ID 1100, the proficiency level 1101, the operation pattern 1102, the operation log 1103, and the contents (11031 to 11038) thereof in association with one another for each record. According to the example illustrated in FIG. 3, the operation log database 1031 records, for an operation log identified by the ID 1100 of "F1" that the proficiency level 1101 of the user which is an operation subject is "5" that the operation log is for the operation pattern 1102 of "M1" that the operation log 1103 is recorded in a data file named "f1_lv5_m1," along with detailed contents of the operation log 1103 (11031 to 11038).

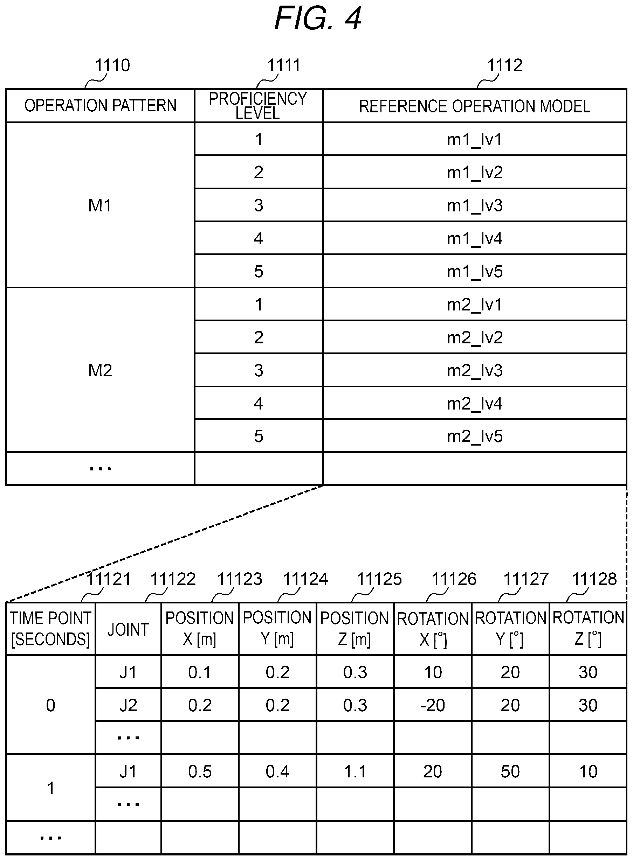

The reference operation model database 1032 is a database in which the reference operation model created for each of the proficiency levels is stored. FIG. 4 illustrates an example of a configuration of the reference operation model database 1032. As illustrated in FIG. 4, the reference operation model database 1032 includes records for each operation pattern 1110. Similar to the operation pattern 1102 in FIG. 3, the record indicates the operation pattern 1110 indicating the type of the operation related to the operation log, a proficiency level 1111 of the user in the operation, and a name of a data file in which a reference operation model 1112 having a correspondence with the proficiency level 1111 is recorded. As illustrated in FIG. 4, the reference operation model 1112 is recorded as a three-dimensional data file including the skeleton information in a file format such as bvh, and includes, as information, a time point 11121 that is time information with a play start time of the reference operation model 1112 as 0 seconds, a joint 11122 that is a label for uniquely identifying each joint constituting the skeleton information, a position 11123 of the joint in the X axis direction in the three-dimensional orthogonal coordinate system, a position 11124 in the Y axis direction, a position 11125 in the Z axis direction, a rotation amount 11126 of the joint in the X axis direction in the three-dimensional orthogonal coordinate system, a rotation amount 11127 in the Y axis direction, and a rotation amount 11128 in the Z axis direction. In other words, the reference operation model database 1032 manages detailed information related to each reference operation model created based on the operation log for each combination of the operation pattern 1110 and the proficiency level 1111 by recording, for each record, the operation pattern 1110, the proficiency level 1111, the reference operation model 1112 and the contents (11121 to 11128) thereof in association with one another. According to the example illustrated in FIG. 4, the reference operation model database 1032 records, for an operation of the operation pattern 1110 of "M1", that the reference operation model 1112 when the proficiency level 1111 is "1" is recorded by a data file having a name of "m1_lv1" together with the detailed content (11121 to 11128) of the reference operation model 1112.

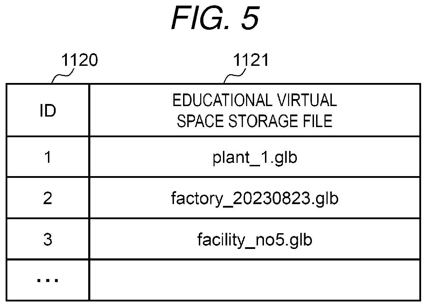

The educational virtual space database 1033 is a database in which a data file used to play the content for education and training described above in each operation log collection device 200 is stored. FIG. 5 illustrates an example of a configuration of the educational virtual space database 1033. As illustrated in FIG. 5, the educational virtual space database 1033 includes a record for each ID 1120. The record indicates the ID 1120, which is a management label for uniquely identifying each educational virtual space in the content for education and training, and a name of an educational virtual space storage file 1121 that is played in each operation log collection device 200 and has a correspondence with the ID 1120. The educational virtual space storage file 1121 is, for example, a data file recorded in a file format such as glb. Examples of the educational virtual space include a 3D virtual space. The 3D virtual space is a three-dimensional virtual space that is implemented by technology such as three-dimensional computer graphics (3DCG) or computer aided design (CAD). That is, the educational virtual space database 1033 manages the educational virtual space storage file 1121 for each file by recording the ID 1120 and the educational virtual space storage file 1121 in association with each other for each record. According to the example illustrated in FIG. 5, the educational virtual space database 1033 stores a data file recorded in a file format of glb such as "plant_1.glb" as the educational virtual space storage file 1121 identified by the ID 1120 of "1".

The arithmetic unit 101 can execute various types of processing including the reference operation model creation processing (to be described in detail later with reference to FIG. 7), the proficiency level determination processing (to be described in detail later with reference to FIG. 8), and the knowledge extraction and provision processing (to be described in detail later with reference to FIG. 9) described above by reading and writing the data indicating various types of information managed by these databases from and into the storage unit (102, 103).

The communication unit 104 executes communication processing with the operation log collection device 200, another device, and the like via the network 300. The communication unit 104 is implemented using, for example, a network interface card (NIC) or a host bus adapter (HBA).

The user interface unit includes functional blocks of the input unit 105 and the output unit 106.

The input unit 105 is in charge of processing related to an input, such as reception of the input operation from the user, among the processing related to the user interface. The input unit 105 is implemented using, for example, the input device such as a keyboard, a mouse, or a touch panel, and detects various operations from the user.

The output unit 106 is in charge of processing related to the output, such as display of various screens on the output device and an audio output, among the processing related to the user interface. The output unit 106 includes various output devices such as a liquid crystal display and a touch screen.

For example, when a remote login is executed from another external device such as the operation log collection device 200 to the proficiency level determination device 100, or when input information is received from the external device via a communication device or output information is provided to the external device, the input unit 105 and/or the output unit 106 are not necessarily provided. In this case, the proficiency level determination device 100 may receive an access from the external device according to a predetermined protocol by having a function of a web server.

That is, components of the proficiency level determination device 100 are implemented by hardware including the processor, the storage device such as the memory or the auxiliary storage device, the wired or wireless communication line BUS that connects these devices, and the interface device, and software that is stored in the storage device and supplies the processing instruction to a computing unit (the processor).

In the description related to the functions of the proficiency level determination device 100, the functions of the proficiency level determination device 100 are implemented integrally by one computer device. However, the functions may be implemented by a plurality of interconnected computer devices and/or server devices. The proficiency level determination device 100 may include a general-purpose computer device such as a laptop PC and a web browser installed in the general-purpose computer device, or may include a web server and various types of portable devices.

The proficiency level determination device 100 is a computer system implemented on one physical computer or a plurality of computers implemented logically or physically, and may operate on a virtual computer constructed on a plurality of physical computer resources. For example, the functional units such as the operation log acquisition unit 1011, the operation log classification unit 1012, the reference operation model creation unit 1013, the reference operation model information extraction unit 1014, the deviation degree calculation unit 1015, the proficiency level determination unit 1016, and the determination result display unit 1017 may operate on separate physical or logical computers, or the plurality of function units may be combined to operate on one physical or logical computer.

The description of the functions is an example. A plurality of functions may be integrated into one function, and one function may be divided into a plurality of functions.

In addition to the functions described above, the proficiency level determination device 100 may further include another function. For example, the proficiency level determination device 100 may include a part of various functions of the operation log collection device 200 as described above.

### Hardware Structure Example of Operation Log Collection Device 200

Next, an example of a hardware structure of the operation log collection device 200 according to the present embodiment will be described.

The operation log collection device 200 is implemented by a computer including at least a storage device including a memory (not illustrated) and an auxiliary storage device (not illustrated), an interface device including at least a communication device (not illustrated), an input device (not illustrated) and an output device (not illustrated), and a processor (not illustrated) connected to these devices.

In the following description, the operation log collection device 200 is implemented by a general-purpose computer device including one or more processors, one or more memories, one or more auxiliary storage devices, one or more communication devices, one or more input devices, one or more output devices, and a wired or wireless communication line BUS that connects these devices.

The auxiliary storage device is an auxiliary storage device including a non-volatile storage element such as a flash memory. Specific examples of the auxiliary storage device include a solid state drive (SSD) and a hard disk drive (HDD). The auxiliary storage device stores at least a program 230. The program 230 is a computer program for implementing the functions required for the operation log collection device 200.

That is, when the program 230 is executed by the processor, the functions of the respective functional units of the operation log collection device 200 such as an operation log acquisition unit 2011, an educational virtual space display unit 2012, and a reference operation model display unit 2013 to be described later are implemented.

The program 230 is provided to the operation log collection device 200 via the network 300 and/or various removable media such as a flash memory and is stored in a non-volatile auxiliary storage device which is a non-transitory storage medium. Therefore, the operation log collection device 200 may include an interface for reading data from the removable media.

The program 230 may be installed from a program source. The program source may be, for example, a program distribution computer or a computer-readable recording medium. The program 230 may be implemented by a device driver, an operating system, various application programs located at a higher layer of the device driver and the operating system, or a library that provides a common function to these programs 230. Two or more programs may be implemented as one program 230, or one program 230 may be implemented as two or more programs.

The memory is a main storage device mainly including a volatile storage element such as a random access memory (RAM). The memory includes a ROM including a non-volatile storage element. The ROM stores an immutable program 230 (for example, BIOS). The memory temporarily stores data indicating various types of information read from the auxiliary storage device and various types of data acquired via the communication device and/or the input device.

The processor is a processor device such as a central processing unit (CPU) and various co-processors. The processor calls various computer programs including the program 230 into the memory and executes the computer programs to execute overall control of the operation log collection device 200 itself and controls an arithmetic unit 201 that executes various types of processing such as arithmetic processing and determination processing.

The interface device includes a communication device that controls a communication unit 204 to be described later, an input device that controls an input unit 205 to be described later, and an output device that controls an output unit 206 to be described later.

The communication device is a network interface device that controls communication with another device according to a predetermined protocol.

The input device includes various input interface devices for receiving the input operation from the user of the proficiency level determination system 10 who owns the operation log collection device 200 and for acquiring the operation log of the user, such as a touch panel. The input device included in the operation log collection device 200 may be, for example, a general input interface device such as a keyboard, a mouse, or a touch panel, or may be a motion capture device capable of precisely acquiring the operation log of the user who is the operation subject. The operation log of the user who owns the operation log collection device 200 is acquired in an appropriate form according to the specification and performance of the input device included in the operation log collection device 200.

The output device includes various output interface devices for outputting a processing result to the user of the proficiency level determination system 10, who owns the operation log collection device 200 in a recognizable form, such as various display devices such as a liquid crystal display or a touch screen. The output device included in the operation log collection device 200 may be, for example, a VR content viewing device such as so-called VR glasses that plays and outputs the content for education and training as VR content in addition to a display such as a general laptop PC, a tablet, or a smartphone that plays and outputs the content for education and training described above as 2D content or 3D content. The content for education and training and the knowledge received from the proficiency level determination device 100 are appropriately played in an appropriate form according to the specification and performance of the output device included in the operation log collection device 200.

The operation log collection device 200 may be implemented by an independent device or may be implemented by an embedded device.

### Functional Block Example of Operation Log Collection Device 200

Next, an example of blocks of various functions included in the operation log collection device 200 will be described with reference to FIG. 6. Each block to be described below does not represent a hardware unit configuration but represents a functional unit block.

The operation log collection device 200 mainly includes the functional blocks including the arithmetic unit 201 implemented by the processor described above, a storage unit (202, 203) implemented by the storage device described above, the communication unit 204 implemented by the communication device described above, and a user interface unit (205, 206) implemented by the input device and/or the output device described above.

The arithmetic unit 201 executes various types of data processing based on programs and data stored in the storage unit (202, 203) and data acquired by the communication unit 204. The arithmetic unit 201 also functions as an interface to the storage unit (202, 203) and the communication unit 204.

As illustrated in FIG. 6, the arithmetic unit 201 includes functional blocks of the operation log acquisition unit 2011, the educational virtual space display unit 2012, and the reference operation model display unit 2013.

The operation log acquisition unit 2011 executes various processing related to acquisition of the operation log of the user.

The educational virtual space display unit 2012 executes various processing related to the display of the educational virtual space read from the proficiency level determination device 100.

The reference operation model display unit 2013 executes various processing related to the display of the reference operation model received from the proficiency level determination device 100.

The arithmetic unit 201 is implemented using a processor and can implement these functional blocks by executing the program 230 described above. Instead of the processor, the arithmetic unit 201 may be implemented using a logic circuit such as a field-programmable gate array (FPGA) or an application specific integrated circuit (ASIC). The arithmetic unit 201 may be implemented by a combination of a processor and a logic circuit.

The storage unit (202, 203) includes, for example, a main storage unit 202 implemented by a memory and an auxiliary storage unit 203 implemented by an auxiliary storage device, and stores the program 230 for supplying various processing instructions to the arithmetic unit 201 and data indicating various types of information used in the processing executed by the arithmetic unit 201.

The arithmetic unit 201 can execute various types of processing by reading and writing data from and to the storage unit (202, 203).

The communication unit 204 executes communication processing with the proficiency level determination device 100, another device, and the like via the network 300. The communication unit 204 is implemented using, for example, a network interface card (NIC) or a host bus adapter (HBA).

The user interface unit includes functional blocks of the input unit 205 and the output unit 206.

The input unit 205 is in charge of processing related to an input, such as reception of the input operation from the user and acquisition of the operation log of the user among the processing related to the user interface. The input unit 205 is implemented using an input device such as a keyboard, a mouse, a touch panel controller, or a motion capture device, and detects various operations from the user.

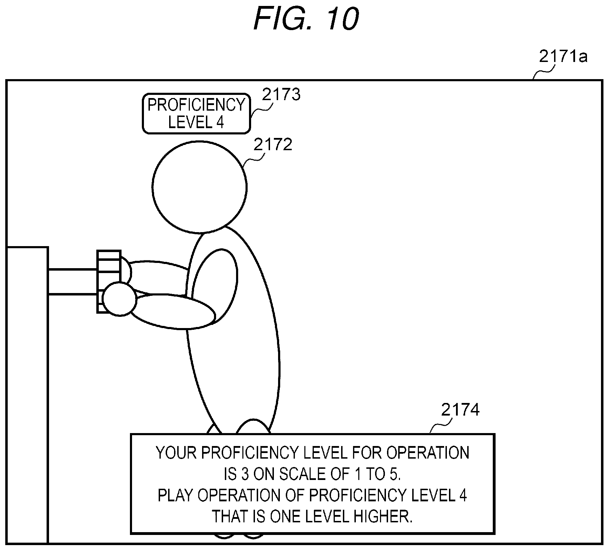

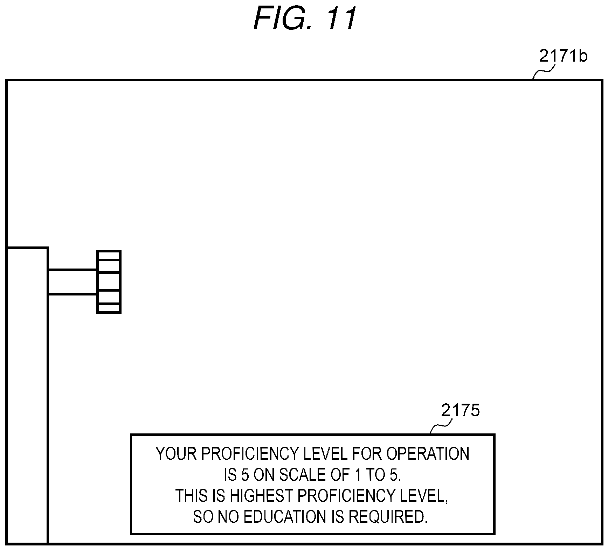

The output unit 206 is in charge of processing related to the output, such as display of various screens on the output device and an audio output, among the processing related to the user interface. The output unit 206 displays, for example, a knowledge play screen (2171a, 2171b) (to be described in detail later) illustrated in FIGS. 10 and 11 on the output device. The output unit 206 includes various output devices such as a liquid crystal display, a touch screen, and VR glasses.

That is, components of the operation log collection device 200 are implemented by hardware including the processor, the storage device such as the memory or the auxiliary storage device, the wired or wireless communication line BUS that connects these devices, and the interface device, and software that is stored in the storage device and supplies the processing instruction to a computing unit (the processor).

In the description related to the functions of the operation log collection device 200, the functions of the operation log collection device 200 are implemented integrally by one computer device. However, the functions may be implemented by a plurality of interconnected computer devices and/or server devices. The operation log collection device 200 may include a general-purpose computer device such as a laptop PC and a web browser installed in the general-purpose computer device, or may include a web server and various types of portable devices.

The description of the functions is an example. A plurality of functions may be integrated into one function, and one function may be divided into a plurality of functions.

In addition to the functions described above, the operation log collection device 200 may further include another function. For example, the operation log collection device 200 may include a part of various functions of the proficiency level determination device 100 as described above.

### Processing Flow Example

Next, the flow of each processing executed by the proficiency level determination system 10 according to the present embodiment will be described with reference to FIGS. 7 to 11.

As described above, the proficiency level determination system 10 according to the present embodiment determines, for a purpose of education and training, the proficiency level of the worker engaged in the various works in the content for education and training performed in the virtual space by education, training, or the like of the user who is the worker, by the reference operation model creation processing illustrated in FIG. 7 and the proficiency level determination processing illustrated in FIG. 8. Then, by the knowledge extraction and provision processing in FIG. 9, the optimal knowledge is extracted based on the proficiency level which is a determination result, and the knowledge is displayed on a display screen of the operation log collection device 200 owned by the user, thereby providing the user with the optimal knowledge according to the determined proficiency level.

As described above, each processing to be described later is implemented by the processor that controls the arithmetic units (101, 201) of each device executing the program 130 stored in the auxiliary storage device that controls the auxiliary storage unit 103 of the proficiency level determination device 100 and/or the program 230 stored in the auxiliary storage device that controls the auxiliary storage unit 203 of the operation log collection device 200. These programs (130, 230) are made up of codes for executing various operations to be described later.

When the operation log of the user is acquired in the operation log collection device 200, when play of the educational virtual space is necessary, the arithmetic unit 201 of the operation log collection device 200 reads the educational virtual space stored in the educational virtual space database 1033 from the proficiency level determination device 100 via the communication unit 204, and plays the educational virtual space by the output unit 206.

### Reference Operation Model Creation Processing

FIG. 7 is a flowchart illustrating an example of a flow of the reference operation model creation processing.

In step S701, the arithmetic unit 101 of the proficiency level determination device 100 executes processing of acquiring, by the operation log acquisition unit 1011, the operation logs acquired by the operation log acquisition unit 2011 in the operation log collection device 200 from the operation log collection device 200. Accordingly, the operation logs are acquired from the operation log collection device 200. When the processing in step S701 is completed, the arithmetic unit 101 of the proficiency level determination device 100 proceeds to step S702.

In step S702, the arithmetic unit 101 of the proficiency level determination device 100 executes processing of classifying, by the operation log classification unit 1012, the operation logs acquired in step S701 for each combination of the operation pattern and the proficiency level. Accordingly, the operation logs are classified for each combination of the operation pattern and the proficiency level. The classified operation logs are stored in the operation log database 1031 according to a classification result. When the processing in step S702 is completed, the arithmetic unit 101 of the proficiency level determination device 100 proceeds to step S703.

In step S703, the arithmetic unit 101 of the proficiency level determination system 10 executes processing of creating, by the reference operation model creation unit 1013, an optimal reference operation model for each combination of the operation pattern and the proficiency level based on the operation log stored in the operation log database 1031. The reference operation model creation unit 1013 executes this processing by extracting all the operation logs having the same value of the proficiency level 1101 and the operation pattern 1102 from the operation logs stored in the operation log database 1031, averaging position information and rotation information in a three-dimensional orthogonal coordinate system for each joint for the extracted operation logs, and creating the reference operation model for each time point. The created reference operation model 1112 is stored in the reference operation model database 1032 for each combination of the operation pattern 1110 and the proficiency level 1111. Accordingly, an optimal reference operation model is created for each combination of the operation pattern and the proficiency level. The reference operation model created in step S703 may be any model that is optimal for each combination of the operation pattern and the proficiency level, and a specific creation method thereof is not limited to the method described above and can be freely set by a designer. When the processing in step S703 is completed, the arithmetic unit 101 of the proficiency level determination device 100 ends the reference operation model creation processing illustrated in the flowchart of FIG. 7.

### Proficiency Level Determination Processing

FIG. 8 is a flowchart illustrating an example of a flow of the proficiency level determination processing.

In step S801, the arithmetic unit 101 of the proficiency level determination device 100 executes processing of receiving, by the operation log acquisition unit 1011, the operation log acquired by the operation log collection device 200 from the operation log collection device 200 via the communication unit 104. Accordingly, the operation log is received from the operation log collection device 200. When the processing in step S801 is completed, the arithmetic unit 101 of the proficiency level determination device 100 proceeds to step S802.

In step S802, the arithmetic unit 101 of the proficiency level determination device 100 executes processing of selecting, by the reference operation model information extraction unit 1014, the reference operation model for the proficiency level in which deviation degree is not calculated. The reference operation model is selected from the reference operation models stored in the reference operation model database 1032. Accordingly, the reference operation model is selected for the proficiency level in which the deviation degree is not calculated. When the processing in step S802 is completed, the arithmetic unit 101 of the proficiency level determination device 100 proceeds to step S803.

In step S803, the arithmetic unit 101 of the proficiency level determination device 100 executes processing of extracting, by the reference operation model information extraction unit 1014, information of an amount corresponding to an amount of information that can be handled in the operation log collection device 200 from the reference operation model selected in step S802. Accordingly, the information of the amount corresponding to the amount of information that can be handled in the operation log collection device 200, for example, information of an amount equivalent to the amount of information that can be handled in the operation log collection device 200 is extracted from the reference operation model. The operation pattern 1110 of the reference operation model 1112 read from the reference operation model database 1032 corresponds to a type of an operation of the operation log received from the operation log collection device 200 in step S802. The type of the operation of the operation log may be received by the input unit 205 in the operation log collection device 200 from the user, or may be automatically determined by the reference operation model information extraction unit 1014 in the proficiency level determination device 100 based on various types of information acquired from the operation log collection device 200. When the processing in step S803 is completed, the arithmetic unit 101 of the proficiency level determination device 100 proceeds to step S804.

In step S804, the arithmetic unit 101 of the proficiency level determination device 100 executes processing of, by the deviation degree calculation unit 1015, calculating an absolute value of a difference between each piece of information extracted from the reference operation model in step S803 and the operation logs for each piece of information, and summing up calculation results to calculate the deviation degree of the operation log with respect to the information of the reference operation model. The deviation degree of the operation log with respect to the information of the reference operation model increases as a deviation between the reference operation model and the operation log increases because a total value of the calculation results increases. Accordingly, the deviation degree of the operation log with respect to the information of the reference operation model is calculated. The deviation degree of the operation log with respect to the information of the reference operation model calculated in step S804 may be appropriately set, and a specific creation method is not limited to the method described above and may be set freely by the designer. When the processing in step 5804 is completed, the arithmetic unit 101 of the proficiency level determination device 100 proceeds to step S805.

In step S805, the arithmetic unit 101 of the proficiency level determination device 100 executes processing of determining, by the reference operation model information extraction unit 1014, whether the deviation degree is calculated for all the proficiency levels. This is because the processing executed in steps S803 and S804 needs to be executed for all the proficiency levels. If it is determined in step S805 that the deviation degree is calculated for all the proficiency levels (YES in step S805), the processing proceeds to step S806. On the other hand, if it is determined in step S805 that the deviation degree is not calculated for all the proficiency levels (NO in step S805), the processing returns to step S802, and the processing in steps S802 to S804 is executed for the proficiency level in which deviation degree is not calculated. This processing is repeatedly executed until it is determined in step S805 that the deviation degree is calculated for all the proficiency levels (YES in step S805).

In step S806, the arithmetic unit 101 of the proficiency level determination device 100 executes processing of determining a reference operation model in which the deviation degree is minimum by the proficiency level determination unit 1016. Accordingly, the reference operation model in which the deviation degree is minimum is determined. When the processing in step S806 is completed, the arithmetic unit 101 of the proficiency level determination device 100 proceeds to step S807.

In step S807, the arithmetic unit 101 of the proficiency level determination device 100 executes processing of allocating, by the proficiency level determination unit 1016, the proficiency level of the reference operation model determined in step S806 as the proficiency level of the operation log. Accordingly, the proficiency level is allocated as the proficiency level of the operation log. When the processing in step S807 is completed, the arithmetic unit 101 of the proficiency level determination device 100 ends the proficiency level determination processing illustrated in the flowchart of FIG. 8.

### Knowledge Extraction and Provision Processing

FIG. 9 is a flowchart illustrating an example of a flow of the knowledge extraction and provision processing.

In step S901, the arithmetic unit 101 of the proficiency level determination device 100 executes processing of determining, by the determination result display unit 1017, whether the proficiency level allocated to the operation log in step S807 of the proficiency level determination processing illustrated in the flowchart of FIG. 8 (hereinafter also referred to as the "proficiency level") is not the highest proficiency level. If it is determined in step S901 that the proficiency level is not the highest (YES in step S901), the processing proceeds to step S902 because it is necessary to improve the proficiency level of a target person. On the other hand, if it is determined in step S901 that the proficiency level is the highest (NO in step S901), the processing proceeds to step S904 because it is not necessary to improve the proficiency level of the target person.

In step S902, the arithmetic unit 101 of the proficiency level determination device 100 executes processing of selecting, by the determination result display unit 1017, a reference operation model corresponding to a proficiency level one level higher than the proficiency level from the reference operation model database 1032 illustrated in FIG. 4. This is because it is possible to expect an improvement in the actual proficiency level with the target person aiming for the proficiency level one level higher. Accordingly, the reference operation model corresponding to the proficiency level one level higher than the proficiency level is selected. When the processing in step S902 is completed, the arithmetic unit 101 of the proficiency level determination device 100 proceeds to step S903.

In step S903, the arithmetic unit 101 of the proficiency level determination device 100 executes processing of transmitting, by determination result display unit 1017, the reference operation model selected in step S902 to the operation log collection device 200 via the communication unit 104 to output the reference operation model to the output device of the operation log collection device 200. When the arithmetic unit 201 of the operation log collection device 200 receives the reference operation model via the communication unit 204, the arithmetic unit 201 outputs the reference operation model to the output device by the reference operation model display unit 2013. Accordingly, the reference operation model is output to the output device of the operation log collection device 200. When the processing in step S903 is completed, the arithmetic unit 101 of the proficiency level determination device 100 proceeds to step S904.

In step S904, the arithmetic unit 101 of the proficiency level determination device 100 executes processing of transmitting, by the determination result display unit 1017, the proficiency level determined in step S807 to the operation log collection device 200 via the communication unit 104 to output the proficiency level to the output device of the operation log collection device 200. When the arithmetic unit 201 of the operation log collection device 200 receives the proficiency level via the communication unit 204, the arithmetic unit 201 outputs the proficiency level to the output device by the reference operation model display unit 2013. Accordingly, the proficiency level is output to the output device of the operation log collection device 200.

FIG. 10 illustrates an example of a knowledge play screen 2171a output to the output device immediately after the determination if it is determined in step S901 that the proficiency level is not the highest (YES in step S901). FIG. 11 illustrates an example of a knowledge play screen 2171b output to the output device immediately after the determination if it is determined in step S901 that the proficiency level is the highest (NO in step S901). In each of the knowledge play screens (2171a, 2171b), the corresponding knowledge is displayed on a screen in which the educational virtual space being played is displayed in advance on the educational virtual space display unit 2012. The knowledge play screen 2171a in FIG. 10 exemplifies a case in which it is determined in step S807 in FIG. 8 that the proficiency level of the user is "3". In this case, a reference operation model of the proficiency level "4", which is a proficiency level one level higher, is displayed as the human model 2172, and the operation is played. In a display region above a head of a human model 2172, the proficiency level is displayed by a text message 2173 such that it is clear which proficiency level the reference operation model being played corresponds to. In this case, on the knowledge play screen 2171a, a text message 2174 is displayed for causing the user to recognize that the proficiency level of the user determined based on the processing in step S904 in FIG. 9 is "3" and an operation of the human model 2172 being displayed corresponds to the proficiency level of "4". In contrast, the knowledge play screen 2171b in FIG. 11 exemplifies a case in which it is determined in step S807 in FIG. 8 that the proficiency level of the user is "5". In this case, on the knowledge play screen 2171b, a text message 2175 is displayed for causing the user to recognize that the proficiency level of the user determined based on the processing in step S904 in FIG. 9 is "5". In this way, according to the proficiency level determination system 10, the proficiency level of the worker, which is the user who uses the operation log collection device 200 to access the content for education and training, can be accurately determined, the optimal knowledge can be extracted according to the determined proficiency level, and the extracted knowledge can be displayed in an appropriate form according to a specification and performance of the output device of the operation log collection device 200, regardless of the specification and performance of the operation log collection device 200. When the processing in step S904 is completed, the arithmetic unit 101 of the proficiency level determination device 100 ends the knowledge extraction and provision processing illustrated in the flowchart of FIG. 9.

The embodiment of the invention described above is summarized as follows.
(1) The proficiency level determination system 10 is a system for determining a proficiency level of a worker and includes: the operation log acquisition unit (1011, 2011) configured to acquire an operation log representing a log of an operation performed by the worker during work from an operating device (the operation log collection device 200) of the worker; the operation log classification unit 1012 configured to classify the acquired operation log according to each of the proficiency levels, which stepwise indicates a degree of proficiency of the worker in the work; the reference operation model creation unit 1013 configured to create, based on the operation log classified according to each of the proficiency levels, a reference operation model corresponding to the proficiency level for each of the proficiency levels; the reference operation model information extraction unit 1014 configured to extract, according to information related to the operation log acquired from the operating device (the operation log collection device 200), information related to the reference operation model corresponding to the operation log; the deviation degree calculation unit 1015 configured to calculate a deviation degree of the operation log with respect to the extracted information related to the reference operation model; and the proficiency level determination unit 1016 configured to determine a reference operation model in which the calculated deviation degree is minimum, and allocate a proficiency level corresponding to the determined reference operation model as a proficiency level of the operation log acquired from the operating device (the operation log collection device 200). As a result, the proficiency level determination system 10 can accurately determine the proficiency level of the worker who uses the terminal (the operation log collection device 200) including the input and output device to access the online content for education and training based on the data acquired via the input device, extract the optimal knowledge according to the determined proficiency level, and display the extracted knowledge in an appropriate form according to a specification and performance of the output device of the terminal (the operation log collection device 200), regardless of the specification and performance of the input and output device of the terminal. That is, according to the proficiency level determination system 10, education, training, and the like can be appropriately performed for each worker in consideration of a difference in access environment for each worker with respect to the online content for education and training and a difference in proficiency level for each worker.
(2) The proficiency level determination system 10 further includes the determination result display unit 1017 configured to select a reference operation model corresponding to a proficiency level one level higher than the proficiency level allocated as the proficiency level of the operation log acquired from the operating device and display the reference operation model on the operating device as a determination result.

The invention is not limited to the embodiment described above and can be implemented using any component without departing from the gist of the invention.

The embodiment described above and various modifications are merely examples, and the invention is not limited to the contents thereof as long as the characteristics of the invention are not impaired. Other aspects conceivable within the scope of the technical idea of the invention are also included within the scope of the invention.

In the drawings described above, control lines and information lines that are considered necessary for description are illustrated, and not all the control lines and information lines on implementation are necessarily illustrated. For example, it may be considered that almost all configurations are actually interconnected.

A disposition form of the functional units of the proficiency level determination system 10 described above is merely an example. The disposition form of the functional units can be changed to an optimal disposition form from a viewpoint of performance, processing efficiency, communication efficiency, and the like of hardware and software included in the proficiency level determination system 10.

## Claims

1. A proficiency level determination system for determining a proficiency level of a worker, the system comprising:
an operation log acquisition unit configured to acquire an operation log representing a log of an operation performed by a worker during work from an operating device of the worker;
an operation log classification unit configured to classify the acquired operation log according to each of the proficiency levels, which stepwise indicates a degree of proficiency of the worker in the work;
a reference operation model creation unit configured to create, based on the operation log classified according to each of the proficiency levels, a reference operation model corresponding to the proficiency level for each of the proficiency levels;
a reference operation model information extraction unit configured to extract, according to information related to the operation log acquired from the operating device, information related to the reference operation model corresponding to the operation log;
a deviation degree calculation unit configured to calculate a deviation degree of the operation log with respect to the extracted information related to the reference operation model; and
a proficiency level determination unit configured to determine a reference operation model in which the calculated deviation degree is minimum, and allocate a proficiency level corresponding to the determined reference operation model as a proficiency level of the operation log acquired from the operating device.

2. The proficiency level determination system according to claim 1, further comprising:
a determination result display unit configured to select a reference operation model corresponding to a proficiency level one level higher than the proficiency level allocated as the proficiency level of the operation log acquired from the operating device and display the reference operation model on the operating device as a determination result.

3. A proficiency level determination method for determining a proficiency level of a worker, the method comprising:
by a computer including at least a processor and a storage device,
acquiring an operation log representing a log of an operation performed by a worker during work from an operating device of the worker;
classifying the acquired operation log according to each of the proficiency levels that indicates a degree of proficiency of the worker in the work;
creating, based on the operation log classified according to each of the proficiency levels, a reference operation model corresponding to the proficiency level for each of the proficiency levels;
extracting, according to information related to the operation log acquired from the operating device, information related to the reference operation model corresponding to the operation log;
calculating a deviation degree of the operation log with respect to the extracted information related to the reference operation model; and
determining a reference operation model in which the calculated deviation degree is minimum, and allocating a proficiency level corresponding to the determined reference operation model as a proficiency level of the operation log acquired from the operating device.

4. A computer program for causing a computer including at least a processor and a storage device and configured to determine a proficiency level of a worker to execute operations comprising:
acquiring an operation log representing a log of an operation performed by the worker during work from an operating device of the worker;
classifying the acquired operation log according to each of the proficiency levels, which indicates a degree of proficiency of the worker in the work;
creating, based on the operation log classified according to each of the proficiency levels, a reference operation model corresponding to the proficiency level for each of the proficiency levels;
extracting, according to information related to the operation log acquired from the operating device, information related to the reference operation model corresponding to the operation log;
calculating a deviation degree of the operation log with respect to the extracted information related to the reference operation model; and
determining a reference operation model in which the calculated deviation degree is minimum, and allocating a proficiency level corresponding to the determined reference operation model as a proficiency level of the operation log acquired from the operating device.
